# FASCICULE DE BREVET EUROPEEN

(11) **EP 1 504 142 B1**
(45) Date de publication et mention de la délivrance du brevet: **21.07.2010**
(21) Numéro de dépôt: 03749920.9
(22) Date de dépôt: 05.05.2003
(51) Int. Cl.: D01D 5/18, C03B 37/04

(54) **BROCHE GRANDES VITESSES POUR MACHINE DE FIBRAGE DE LAINE MINERALE**
HOCHGESCHWINDIGKEITSSPINDEL FÜR MINERALFASERWOLLE ERZEUGENDE MASCHINE
HIGH-SPEED SPINDLE FOR A MINERAL WOOL FIBRE-FORMING MACHINE

(30) Priorité: 06.05.2002 FR 0205647
(43) Date de publication de la demande: 09.02.2005
(73) Titulaire: EREM, 76304 Sotteville Les Rouen (FR)
(72) Inventeur: GIULIANI, Lando, F-76800 Saint-Etienne Du Rouvray (FR)
(74) Mandataire: Prugneau, Philippe
(86) Numéro de dépôt international: PCT/FR2003/001392
(87) Numéro de publication internationale: WO 2003/095720

(56) Documents cités:
- EP-A- 0 195 725
- WO-A-88/06146
- WO-A-96/36572
- US-A- 3 928 009

## Description

L'invention concerne une broche pour machine de fibrage de laine minérale par centrifugation libre, comprenant un arbre monté sur des roulements à l'intérieur d'un palier en forme de fourreau.

Une machine de fibrage de laine minérale par centrifugation libre comprend classiquement une série de broches portant chacune une roue de centrifugation ou rotor. Les broches sont disposées parallèlement les unes aux autres suivant un assemblage mettant les surfaces périphériques des roues à proximité les unes des autres.

Jusqu'à présent, dans une telle machine de fibrage, l'arbre de chaque broche est entraîné en rotation par une courroie motorisée. Les roulements de la broche sont du type à billes ou à rouleaux. Ils sont lubrifiés par un brouillard d'huile et acceptent généralement des vitesses de rotation de l'arbre de l'ordre de 10000 tours par minute (10000 t/mn). La lubrification par brouillard d'huile présente des inconvénients. Elle entraîne d'abord une certaine pollution de l'environnement dans lequel est placée la machine de fibrage, la consommation d'huile étant de l'ordre de 200 litres par mois par broche. Elle complique la structure de la broche du fait qu'il est nécessaire de prévoir un circuit de distribution de l'huile vers l'avant et vers l'arrière de l'arbre où sont placés les roulements. L'huile est mise en pression dans le circuit de distribution ce qui nécessite des joints d'étanchéité entre les parties tournantes et fixes de la machine de fibrage. Par ailleurs, un circuit de refroidissement, par exemple un circuit d'eau, doit être prévu à l'intérieur de la broche pour refroidir les joints d'étanchéité en plus du circuit de refroidissement du rotor. Tous ces circuits de refroidissement font que le palier est une structure mécano-soudée. Enfin, il existe un besoin d'obtenir des vitesses de rotation des roues de centrifugation qui vont au-delà de 10000 t/mn dans le but d'améliorer la qualité de la laine minérale, besoin auquel ne peut pas répondre une machine de fibrage actuelle.

Le but de l'invention est de proposer une broche grandes vitesses pour machine de fibrage qui pallie les inconvénients précités et qui accepte des vitesses de rotation de l'ordre 12000 tours par minute et plus. Ce but est atteint selon l'invention par une broche caractérisée en ce que les roulements sont des roulements de précision graissés à vie et en ce que le palier en forme de fourreau est une pièce usinée monobloc. Avec cet agencement, il n'est plus nécessaire de prévoir un dispositif de lubrification par brouillard d'huile dans le fourreau de la broche pour graisser les roulements. Les roulements de précision graissés à vie sont des roulements à billes céramiques lubrifiées à la graisse. Deux paires de roulements à billes à contact oblique pourront être disposées dans le fourreau en étant espacés axialement l'une de l'autre le long de l'arbre, les deux paires de roulements étant disposées suivant un montage classique dit en O. Pour compenser les balourds lors du fonctionnement de la broche dans une machine de fibrage, une précontrainte de l'ordre de 500 à 1000 dN pourra être exercée axialement sur les deux roulements d'extrémité en bout d'arbre par un système de précontrainte comme des rondelles usinées type Belleville. La structure monobloc du fourreau fait qu'à des vitesses de 12000 t/mn, les vibrations de la broche sont très faibles.

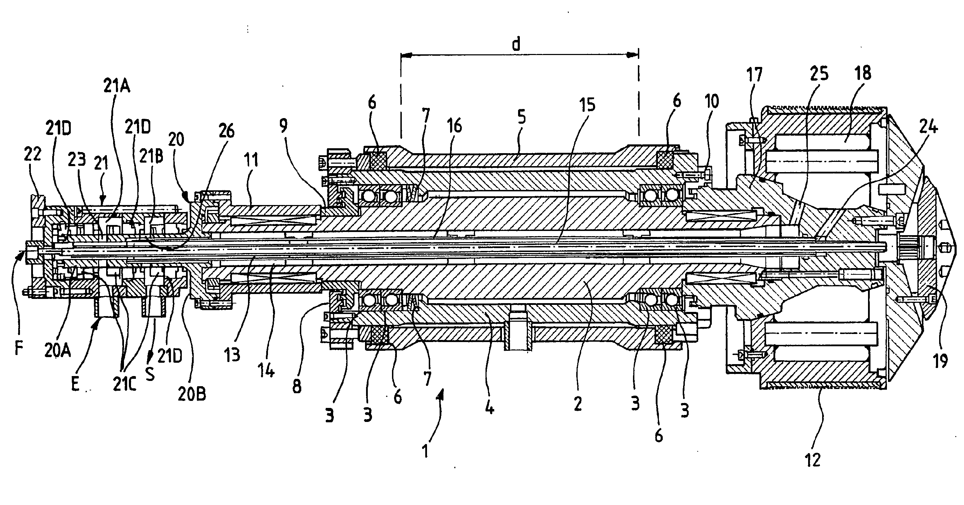

Un exemple de réalisation d'une broche selon l'invention est décrit plus en détail ci-après et illustré sur la figure unique en coupe schématique longitudinale.

La broche 1 grandes vitesses montrée sur la figure comprend un arbre 2 monté rotatif sur des roulements de précision graissés à vie 3 disposés à l'intérieur d'un palier 4 en forme de fourreau. Le palier 4 est une pièce usinée monobloc qui entoure l'arbre 2.

Comme visible sur la figure, deux paires de roulements à contact oblique 3 espacées axialement l'une de l'autre le long de l'arbre sont disposées dans des épaulements annulaires de l'arbre 2 et du palier 4 suivant un montage en O pour compenser les charges radiales qui s'exercent sur l'arbre 2. Les roulements 3 sont des roulements à billes en céramique et à corps en acier muni de flasques étanches servant à la rétention de la graisse. Avec de tels roulements, l'arbre 2 peut supporter un balourd allant jusqu'à 20 grammes en permanence pour une vitesse de rotation de 12000 t/mn.

Le palier 4 est fixé dans un châssis 5 de la machine de fibrage et des plots élastiques 6 sont disposés entre le palier 4 et le châssis 5 pour compenser les vibrations du palier pendant la rotation de l'arbre 2. Les plots 6 peuvent être des anneaux en caoutchouc ou analogue entourant le palier 4 à ses deux extrémités. Avec ce montage, les vibrations du châssis 5 sont pratiquement nulles à une vitesse de 12000 t/mn de l'arbre 2.

Une précontrainte de 500 à 1000 dN est exercée axialement sur les deux roulements 3 d'extrémité avant et arrière par un système de élastique de précontrainte 7, par exemple des rondelles usinées type Belleville, pour compenser les balourds supportés par l'arbre 2. Plus particulièrement, les rondelles élastiques 7 sont disposées dans le fond des épaulements annulaires arrière de l'arbre 2 et du palier 4 qui servent de portée pour les roulements arrière 3 et la précontrainte est exercée par serrage de deux bagues à chicanes 8 et 9, la bague 8 de plus grand diamètre étant fixée sur le bord arrière du palier 4 de manière à recouvrir la bague 9 placée en butée contre les roulements arrière 3. Par ailleurs, une bague 10 est fixée sur le bord avant du palier 4 en appui contre les roulements avant 3 disposés en butée dans les épaulements annulaires avant de l'arbre 2 et du palier 4.

Des essais ont montré qu'avec une distance d entre les deux roulements 3 intérieurs comprise entre 250 et 350 mm et avec un diamètre extérieur maximal de l'arbre 2 entre ces deux roulements intérieurs compris entre 80 et 120 mm la broche pouvait fonctionner à 12000 t/mn pendant plus de 6000 heures en conservant une excellente tenue mécanique.

L'arbre 2 est entraîné en rotation par l'intermédiaire d'une courroie engagée sur une poulie 11 en acier à diamètre variable du type poulie « Poly-V » qui est directement montée en bout d'arbre en arrière de la bague 9 et qui est bloquée sur l'arbre 2 avec deux clavettes disposées diamétralement en opposition.

L'arbre 2 est traversé par un circuit fermé de fluide destiné à conduire un fluide de refroidissement de l'arrière vers l'avant de la broche où est montée une roue de centrifugation ou rotor 12. Le fluide de refroidissement est en particulier de l'eau sous pression. Le circuit fermé de fluide comprend un premier canal annulaire 13 délimité par deux cannes creuses insérées l'une dans l'autre qui traversent axialement l'arbre 2 et un second canal annulaire 14 qui entoure le canal 13 et qui traverse axialement l'arbre 2. Les deux cannes définissant le canal 13 comprennent une première canne 15 intérieure qui sert à l'injection de liant pour la fibre de roche à l'avant du rotor 12 et une seconde canne 16 extérieure entourant la canne 15 et qui est maintenue à l'intérieur d'un alésage intérieur cylindrique de l'arbre 2 à l'aide d'entretoises.

A l'avant de la broche 1, le rotor 12 est fixé sur un nez de broche 17 qui est emboîté sur l'extrémité avant de l'arbre 2. Le nez de broche 17 présente une surface extérieure de forme générale conique pour permettre un centrage automatique du rotor 12 par rapport à l'arbre 2. Le rotor 12 comporte une cavité intérieure 18 dans laquelle débouchent les canaux annulaires 13 et 14 et le nez de broche 17 est traversé axialement par la canne intérieure 15. Une pièce 19 est fixée centralement sur le rotor 12 devant l'extrémité avant de la canne 15 pour servir de diffuseur du liant.

A l'arrière de la broche 1, un joint tournant intégral 20 en inox est fixé sur le bord périphérique de la poulie 11 et, un boîtier 21 définissant deux conduits séparés formant une entrée E et une sortie S de fluide, est emboîté sur le joint tournant 20 de manière étanche pour raccorder l'entrée de fluide au premier canal 13 et la sortie de fluide au second canal 14. Ce boîtier 21 est par ailleurs traversé de manière étanche par la canne intérieure 15. Cet agencement contribue à la compacité de la broche. Le boîtier 21 avec le joint intégral 20 peut être stocké en un seul bloc. Contrairement à une boîte à eau équipant une broche en partie arrière de l'arbre, le boîtier 21 peut être facilement démonté du joint tournant 20 ou remonté pour les besoins d'une intervention sur la poulie 11.

Comme visible sur la figure, le joint tournant 20 est une pièce usinée constituée par un fourreau 20A cylindrique emboîté sur l'extrémité arrière de la canne extérieure 16 et par une couronne 20B coaxiale au fourreau 20A qui prolonge ce dernier et qui est fixée sur le bord périphérique de la poulie 11. Le joint tournant 20 est donc solidaire en rotation de l'arbre 2.

Le boîtier 21 de forme sensiblement cylindrique est emboîté sur le fourreau 20A du joint tournant et est maintenu en position fixe par un bras de réaction 22 solidaire du bâti 5 de la machine de fibrage. Les conduits 21A,21 B à l'intérieur du boîtier 21 sont séparés par des garnitures usinées 21C et des joints toriques 21 D d'étanchéité. La canne intérieure 15 traverse axialement le fourreau 20A du joint tournant 20 et le boîtier 21. L'extrémité arrière de la canne intérieure 15 débouche sur le flanc extérieur du boîtier 21 et forme une entrée F pour l'injection du liant dans la broche.

Les flèches E et S illustre le sens du circuit fermé de fluide dans la broche. Le fluide, plus particulièrement de l'eau, est injecté sous pression par l'entrée E, passe dans le conduit 21A qui communique avec le canal 13 à travers des orifices 23 ménagés dans le fourreau 20A du joint tournant 21. L'eau circule dans le canal 13 jusqu'à la cavité 18 à travers des orifices 24 ménagés dans le nez de broche 17. Au contact de la paroi intérieure de la cavité 18, l'eau refroidit la périphérie extérieure du rotor 12 et repart dans le canal 15 à travers des orifices 25 ménagés dans le nez de broche 17. Le canal 15 communique avec le conduit 21 B du boîtier 21 par des orifices 26 ménagés dans le fourreau 20A pour être évacuée par la sortie S. Les orifices 26 sont espacés axialement des orifices 23 et séparés de manière étanche par une garniture 21C et un joint torique 21 D.

Comme visible sur la figure, l'entrée E et la sortie S du circuit de fluide de refroidissement sont disposées en alignement axial sur la surface périphérique extérieure du boîtier tandis que le liant pour la fibre de roche est injecté par l'entrée F à l'extrémité arrière du boîtier. La broche selon l'invention comprend donc seulement un seul circuit de refroidissement pour le rotor 12 et un canal d'injection de liant pour la laine de roche. L'agencement du boîtier avec la disposition des entrées E et F contribue à éliminer tout risque de mauvais raccordement des flexibles sur les entrées E et F par l'opérateur.

## Revendications

1. Broche pour machine de fibrage de laine minérale par centrifugation libre, comprenant un arbre (2) monté sur des roulements (3) en céramique à l'intérieur d'un palier (4) en forme de fourreau, **caractérisée en ce que** les roulements sont des roulements de précision lubrifiées à la graisse comprenant des billes en céramique et un corps en acier muni de flasques étanches pour retenir ladite graisse et **en ce que** le palier en forme de fourreau est une pièce usinée monobloc.

2. Broche selon la revendication 1, comprenant au moins deux roulements à billes à contact oblique espacés axialement l'un de l'autre le long de l'arbre, les deux roulements étant disposés suivant un montage dit en O.

3. Broche selon la revendication 2, dans lequel une précontrainte est exercée axialement sur les deux roulements par un système élastique de précontrainte (7).

4. Broche selon la revendication 3, dans lequel le système de précontrainte (7) est formé par des rondelles type Belleville.

5. Broche selon l'une des revendications 3 ou 4, dans laquelle la précontrainte exercée sur les roulements est de l'ordre de 500 à 1000 dN.

6. Broche selon l'une des revendications 1 à 5, dans lequel la distance (d) entre les deux roulements est comprise entre 250 et 350 mm et le diamètre extérieur maximal de l'arbre entre les deux roulements est compris entre 80 et 120 mm.

7. Broche selon l'une des revendications 1 à 6, dans lequel l'arbre est traversé axialement par un circuit fermé de fluide destiné à conduire un fluide de refroidissement vers l'avant de la broche et dont l'entrée (E) et la sortie (S) sont disposées à l'arrière de la broche dans un boîtier étanche (21) emboîté sur un joint tournant intégral (20) solidaire en rotation de l'arbre.

8. Machine de fibrage de laine minérale par centrifugation libre comprenant au moins broche selon l'une des revendications 1 à 7 sur laquelle est montée une roue de centrifugation (12).

9. Machine selon la revendication 8, dans laquelle la roue de centrifugation (12) est montée sur un nez de broche (17) de forme conique fixé à l'extrémité de l'arbre (2).

## Claims

1. A spindle for a mineral wool fiber-forming machine employing free centrifuging, the spindle comprising a shaft (2) mounted on ceramic rolling bearings (3) inside a sleeve (4) in the form of a sheath, the spindle being **characterized in that** the rolling bearings are precision grease-lubricated bearings comprising ceramic balls and a steel body having leakproof end plates for retaining said grease, and **in that** the sleeve in the form of a sheath is a one-piece machined part.

2. A spindle according to claim 1, including at least two oblique-contact ball bearings spaced axially apart from each other along the shaft, the two bearings being disposed in a so-called O-mounting.

3. A spindle according to claim 2, wherein prestress is exerted axially on the two bearings by a resilient prestress system (7).

4. A spindle according to claim 3, wherein the prestress system (7) is formed by Belleville type washers.

5. A spindle according to claim 3 or claim 4, wherein the prestress exerted on the bearings is of the order of 500 dN to 1000 dN.

6. A spindle according to any one of claims 1 to 5, wherein the distance (d) between the two bearings lies in the range 250 mm to 350 mm, and the maximum outside diameter of the shaft between the two bearings lies in the range 80 mm to 120 mm.

7. A spindle according to any one of claims 1 to 6, wherein the shaft is pierced axially by a closed fluid circuit for conveying a cooling fluid to the front of the spindle and having its inlet (E) and outlet (S) disposed behind the spindle in a leaktight box (21) engaged on an incorporated rotary gasket (20) constrained to rotate with the shaft.

8. A mineral wool fiber-forming machine employing free centrifuging, the machine including at least one spindle according to any one of claims 1 to 7 having a centrifuging wheel (12) mounted thereon.

9. A machine according to claim 8, wherein the centrifuging wheel (12) is mounted on a conically-shaped spindle nose (17) fastened to the end of the shaft (2).

## Patentansprüche

1. Spindel für eine Mineralwollfaserziehmaschine durch freies Schleudern, die eine Welle (2) umfasst, die auf Keramiklagern (3) im Innern eines Lagergehäuses (4) in Hülsenform montiert ist, **dadurch gekennzeichnet, dass** die Lager Präzisionslager sind, die mit einem Schmiermittel geschmiert sind, die Keramikkugeln und einen Stahlkörper umfassen, der mit dichten Flanschen zum Halten des genannten Schmiermittels versehen ist, und **dadurch**, dass das hülsenförmige Lagergehäuse ein aus einem Stück gearbeiteter Block ist.

2. Spindel nach Anspruch 1, die wenigstens zwei Schrägkugellager umfasst, die entlang der Achse axial voneinander beabstandet sind, wobei die beiden Lager O-förmig angeordnet sind.

3. Spindel nach Anspruch 2, in der die beiden Lager mit einem elastischen Vorspannsystem (7) axial vorgespannt sind.

4. Spindel nach Anspruch 3, in dem das Vorspannsystem (7) von Belleville-Federscheiben gebildet wird.

5. Spindel nach Anspruch 3 oder 4, in dem die auf die Lager aufgebrachte Vorspannung in der Größenordnung von 500 bis 1000 dN liegt.

6. Spindel nach einem der Ansprüche 1 bis 5, in der der Abstand (d) zwischen den beiden Lagern zwischen 250 und 350 mm liegt und der maximale Außendurchmesser der Welle zwischen den beiden Lagern zwischen 80 und 120 mm liegt.

7. Spindel nach einem der Ansprüche 1 bis 6, in der die Welle axial von einem geschlossenen Fluidkreislauf durchquert wird, um ein Kühlfluid zum vorderen Teil der Spindel zu leiten, und dessen Eingang (E) und Ausgang (S) im hinteren Teil der Spindel in einem dichten Gehäuse (21) angeordnet sind, das an einer integrierten Drehverbindung (20) drehfest mit der Welle verbunden ist.

8. Mineralwollfaserziehmaschine durch freies Schleudern, die wenigstens eine Spindel nach einem der Ansprüche 1 bis 7 umfasst, an der ein Schleuderrad (12) montiert ist.

9. Maschine nach Anspruch 8, in der das Schleuderrad (12) auf einer konischen Spindelnase (17) montiert ist, die am Ende der Welle (2) befestigt ist.
